# NEUE EUROPÄISCHE PATENTSCHRIFT

(11) **EP 1 429 109 B2**
(45) Veröffentlichungstag und Bekanntmachung des Hinweises auf die Entscheidung über den Einspruch: **29.06.2011**
(45) Hinweis auf die Patenterteilung: 04.04.2007
(21) Anmeldenummer: 03025131.8
(22) Anmeldetag: 03.11.2003
(51) Int. Cl.: G01B 5/012, F16F 15/03, G05B 19/04

(54) **Verfahren und Vorrichtung zur Schwingungsdämpfung eines Koordinatenmessgerätes**
Method and apparatus for vibration damping of a coordinate measuring machine
Procédé et dispositif pour amortir les vibrations dans une machine à mesurer par coordonnées

(30) Priorität: 11.12.2002 DE 10257856
(43) Veröffentlichungstag der Anmeldung: 16.06.2004
(73) Patentinhaber: Hexagon Metrology GmbH, 35578 Wetzlar (DE)
(72) Erfinder: Müller, Hans-Jürgen, Dipl.-Ing., Braunfels-Neukirchen (DE); Habermehl, Eckhard, Dr., Dipl.-Phys., 36341 Lauterbach (DE)
(74) Vertreter: Knefel, Cordula

(56) Entgegenhaltungen:
- EP-A2- 0 569 694
- EP-B1- 0 211 202
- DE-A1- 10 100 350
- DE-A1- 19 614 883
- US-A- 5 086 564
- US-A1- 2002 095 975
- M.R.KATEBI, T. LEE, M.J.GRIMBLE: "Total control of fast coordinate measuring machines" IEE PROC.CONTROL THEORY APPL., Bd. 141, Nr. 6, November 1994 (1994-11), Seiten 373-383, XP002384694

## Beschreibung

Die Erfindung betrifft ein Verfahren zur Schwingungsdämpfung eines Koordinatenmessgerätes sowie ein Koordinatenmessgerät.

Zum dimensionellen Vermessen von Werkstücken werden nach dem Stand der Technik messende Tastköpfe verwendet, die aus einem festen Teil bestehen, das fest mit einer beweglichen Tragstruktur verbunden ist, sowie aus mindestens einem beweglichen Teil, das relativ zum festen Teil beweglich ist, sowie einer Messeinrichtung, die die Auslenkung des beweglichen Teils relativ zum festen Teil misst. Die Tragstrukturen spannen dabei ein räumliches Koordinatensystem auf, innerhalb dessen der Tastkopf bewegt werden kann, um beispielsweise ein Werkstück kontinuierlich abzutasten (zu scannen). Dabei treten unerwünschte Schwingungen sowohl der Tragstrukturen als auch der Tastkopfschaukeln auf, die zu Messfehlern führen. Insbesondere die Schwingungen der Tastkopfschaukeln führen zu Oszillationen der Antastkräfte, die ihrerseits zu Änderungen der Tasterbiegung führen, die bei der Tasterkalibrierung nicht erfasst werden und deshalb nicht korrigiert werden können. Dies macht sich insbesondere bei langen und biegeweichen Tastern bemerkbar.

Zum Stand der Technik (US-PS 5,088,208) gehört ein messender Tastkopf, der eine Dämpfungseinrichtung trägt, die aus einem Zylinder besteht, in dem sich eine zähe Flüssigkeit (Silicone) befindet, und einem Stempel, der in diese Flüssigkeit hineinragt. Die Dämpfungswirkung wird dadurch erzielt, dass der Stempel und der Zylinder jeweils mit den Komponenten des Tastkopfes fest verbunden sind, die sich gegeneinander bewegen.

Diese zum Stand der Technik gehörende Dämpfungsvorrichtung hat den Nachteil, dass die Flüssigkeit aus dem Zylinder herauslaufen kann. Dieses Problem wurde in der Druckschrift US-PS 5,088,208 durch eine Elastomermanschette gelöst, die den Stempel und den Zylinder umfasst. Diese Lösung hat jedoch wiederum den Nachteil, dass die Manschette undefinierte Zusatzkräfte auf die sich zueinander bewegenden Teile des Tastkopfes ausübt. Außerdem lässt sich eine solche Manschette nicht absolut dicht ausbilden, was zum unerwünschten Herauskriechen des Silikons führen kann. Weiter hat diese passive Dämpfungsvorrichtung den Nachteil, dass sie immer im Eingriff ist, was bei schnellen Lastwechseln an der Tastkopfschaukel zu Zusatzkräften führt, die ihrerseits den Taststift verbiegen, was zu Messfehlern führt.

Weiterhin gehört zum Stand der Technik (DE 44 24 225 A1) ein messender Tastkopf, der seine Antastkräfte mittels als elektromagnetische Tauchspulen ausgeführter Kraftgeneratoren ausübt. Diese Kraftgeneratoren können auch zum Dämpfen der Relativbewegung - insbesondere unerwünschter Schwingungen - verwendet werden.

Diese zum Stand der Technik gehörende Dämpfungsvorrichtung hat den Nachteil, dass sie hochpräzise Bauteile umfasst und deshalb für Tastköpfe, die ihre Antastkräfte nicht durch elektromagnetische Kraftgeneratoren, sondern durch mechanische Federn erzeugen, zu kostenintensiv ist. Weiter wird durch den Tauchspulenantrieb unerwünschte Wärme erzeugt, die die maßliche Integrität der Tastkopfmechanik und des Messsystems beeinträchtigt.

Zum Stand der Technik (DE 101 00 350 A1) gehört auch eine Dämpfungseinrichtung, die eine Blattfeder mittels eines Elektromagneten an einen Reibpartner anlegt und dadurch eine Reibung erzeugt, deren Stärke durch den Elektromagneten einstellbar ist.

Diese Dämpfungseinrichtung hat den Nachteil, dass sie ohne besondere Maßnahmen eine wegproportionale Dämpfung erzeugt, während im Tastkopf eine geschwindigkeitsproportionale Dämpfung erwünscht wäre. Dies wird in der DE 101 00 350 A1 durch eine nicht näher beschriebene Regelung erzeugt, die die Reibkraft proportional zur ersten Ableitung (Geschwindigkeit) des Wegmesssignals des Tastkopfes einstellt. Trotzdem bleiben die prinzipbedingten nachteiligen Eigenschaften einer Reibdämpfung - insbesondere bei kleinen Reibkräften - wie Hysterese oder ungenaue Einstellbarkeit erhalten.

Weiterhin ist im Stand der Technik (DE 196 14 883 A1) ein Verfahren beschrieben, das Schwingungen der Tragstrukturen des Tastkopfes dadurch minimiert, dass mittels an diesen Strukturen angebrachter Beschleunigungssensoren diese Strukturschwingungen erfasst und als Störgröße in den Antriebsregelkreis eingekoppelt werden. Dadurch werden Tastkopfschwingungen, die durch Tragstrukturschwingungen angeregt werden, minimiert. Bei diesen zum Stand der Technik gehörenden Verfahren wird jedoch zusätzliche Sensorik an verschiedenen Stellen des Messgerätes benötigt. Diese zusätzliche Sensorik ist mit zusätzlichen Kosten verbunden.

Zum Stand der Technik (EP 0 974 882 A1) gehört ebenfalls ein Verfahren, welches mit zusätzlicher Sensorik die Strukturschwingungen erfasst. In Fig. 4 der EP 0 974 882 A1 ist dargestellt, dass Beschleunigungssensoren (44) direkt oberhalb des Anbringungsortes des Tastkopfes an der Pinole (Quill) angebracht sind. Diese in den drei Raumrichtungen (X, Y, Z) angebrachten Sensoren messen die resultierende Beschleunigung, die der Tastkopf auf Grund von Schwingungen der gesamten Tragstruktur erfährt. Diese resultierende Beschleunigung wird dann als Störgröße in den Antriebsregler des Koordinatenmessgerätes eingekoppelt, um sie zu dämpfen. Auch dieses zum Stand der Technik gehörende Verfahren hat den Nachteil, dass zusätzliche Sensorik benötigt wird, die sehr kostenaufwändig ist. Außerdem werden Schwingungen der Tastkopfschaukeln relativ zum festen Teil des Tastkopfes, wie sie beispielsweise durch Reibung zwischen dem Tastelement und dem Werkstück beim kontinuierlichen Abtasten (Scannen) angeregt werden können, nicht erfasst.

Zum Stand der Technik (DE 101 11 377 A1) gehört darüber hinaus ein Tastkopf mit einer Tarierung. Die Tarierung kann das bewegliche, den Taststift tragende Teil in wenigstens einer Messrichtung in einer Solllage tarieren. Um Fehltarierungen in der betreffenden zu tarierenden Messrichtung bei Schwingungen des Tastkopfes zu vermeiden, wird die Amplitude von Schwingungen des den Taststift tragenden Teils in der Messrichtung ermittelt, danach wird ein vordefiniertes Tarierfenster angepasst, das die maximalen Abweichungen um die Solllage in der betreffenden Messrichtung festlegt entsprechend der Amplitude, und anschließend erfolgt das Tarieren des den Taststift tragenden Teiles derart, dass die Messwerte des den Taststift tragenden Teiles in der betreffenden Messrichtung das definierte Tarierfenster um die Solllage nicht überschreiten.

Ein Verfahren, das Messwerte der Auslenkung des beweglichen, den Taststift tragenden Teiles (Tastkopfschaukel) des Tastkopfes zur Schwingungsdämpfung nutzt, ist in dieser Schrift nicht offenbart.

Das der Erfindung zugrunde liegende technische Problem besteht darin, eine Vorrichtung und ein Verfahren zur Schwingungsdämpfung im Tastkopf anzugeben, die die oben genannten Nachteile nicht enthalten.

Dieses technische Problem wird durch ein Verfahren mit den Merkmalen gemäß Anspruch 1 sowie mit einem Koordinatenmessgerät mit den Merkmalen gemäß Anspruch 3 gelöst.

Das Tastkopfmesssignal und/oder seine zeitlichen Ableitungen werden gemäß der Erfindung in geeigneter Weise als Störgröße in den Antriebsregelkreis der Achsenantriebe des Koordinatenmessgerätes eingekoppelt. Dies hat den Vorteil, dass eine Reibungsdämpfung im Messkopf nicht notwendig ist, so dass die oben genannten Nachteile nicht auftreten. Weiter wird keinerlei zusätzliche Sensorik, wie Beschleunigungsmesser oder Ähnliches benötigt. Das Wegmesssystem im Tastkopf ist ohnehin vorhanden.

Das erfindungsgemäße Verfahren eignet sich hervorragend dafür, Schwingungen zu beseitigen, die beim Scannvorgang auftreten. Insbesondere durch Reibungseffekte treten Tastkopfschwingungen auf. Durch die Reibung geraten beide aneinanderreibenden Partner in Schwingungen. Die Schwingungen des Tasters verursachen Biegungen des Tastelementes. Diese Biegungen werden gemäß dem Stand der Technik bisher von keinem Korrekturmodell erfasst und können damit nicht korrigiert werden.

Durch die auftretenden Biegungen des Tastelementes werden Schwingungen der Tastkopfschaukel erzeugt, da die Biegeschwingungen sich auf die Tastkopfschaukel des Koordinatenmessgerätes übertragen. Gemäß der Erfindung werden diese in der Tastkopfschaukel erzeugten Schwingungen gemessen und wie beschrieben als Störgröße in den Antriebsregelkreis der Achsenantriebe des Koordinatenmessgerätes eingekoppelt.

Damit hat das erfindungsgemäße Verfahren den Vorteil, dass Biegeschwingungen des Tasters eliminiert werden können.

Das erfindungsgemäße Koordinatenmessgerät weist einen Tastkopf und wenigstens einen Antriebsregelkreis für die Achsenantriebe des Koordinatenmessgerätes auf. Darüber hinaus ist eine Vorrichtung zur Erfassung der Auslenkung des beweglichen Teiles des Tastkopfes relativ zu dem festen Teil vorgesehen sowie eine Regelvorrichtung zur Regelung des wenigstens einen Antriebsregelkreises in Abhängigkeit der erfassten Schwingungen.

Gemäß der Erfindung wird der dynamische Messkopfzustand im Antriebsregelgesetz berücksichtigt mit dem Ziel, den Messkopf so zu führen, dass keine Schwingungen entstehen. Hierbei sind die unterschiedlichen Schwingungszustände im angetasteten und nicht angetasteten Zustand zu berücksichtigen.

Vorteilhaft ist die Regelvorrichtung zur Regelung des wenigstens einen Antriebsregelkreises als Software ausgebildet. Es ist auch möglich, sie als Hardware auszubilden.

Gemäß einer besonders bevorzugten Ausführungsform wird die gesamte Tastkopfregelung mit vorhandenen Komponenten durchgeführt. Das bedeutet, dass das ohnehin erfasste Tastkopfsignal und/oder seine zeitlichen Ableitungen zur Erzeugung einer Störgröße verwendet werden, die in den ohnehin vorhandenen Antriebsregelkreis der Achsenantriebe des Koordinatenmessgerätes eingekoppelt wird. Das bedeutet, dass gemäß der bevorzugten Ausführungsform lediglich die zusätzliche Regelvorrichtung, die die Störgröße berücksichtigt, vorgesehen sein muss.

Gemäß der Erfindung werden die Relativbewegungen des festen Teiles des Tastkopfes, der üblicherweise an einer Pinole befestigt ist, und des beweglichen Teiles des Tastkopfes ermittelt. Zustandsgrößen dieser Relativbewegung werden an einen Regler übermittelt. Der Regler wiederum hat Einfluss auf den Antrieb der Pinole und kann damit im Tastkopf auftretende Schwingungen durch entsprechende Bewegungen ausgleichen.

In der Zeichnung ist ein Ausführungsbeispiel der Erfindung dargestellt, und zwar zeigen:
- Fig. 1: eine schematische Darstellung eines Antriebs- und Regelkreises eines Tastkopfes im nicht angetasteten Zustand;
- Fig. 2: eine schematische Darstellung eines Antriebs- und Regelkreises eines Tastkopfes im angetasteten Zustand;
- Fig. 3: ein geändertes Ausführungsbeispiel.

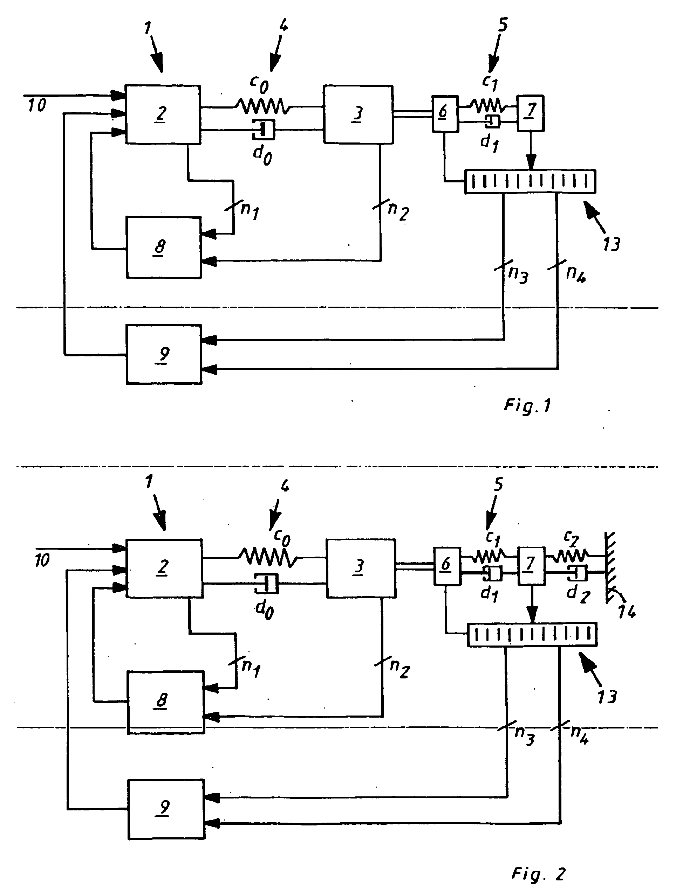

Fig. 1 zeigt einen Antriebsregelkreis (1) mit einer Antriebsseite (2) und einer Tastseite (3). Das System weist eine schematisch angedeutete Getriebeelastizität (4) auf. Ein Tastkopf (5) besteht aus einem festen Messkopfteil (6) und wenigstens einem beweglichen Messkopfteil (7) sowie wenigstens einem Messsystem (13), das die Relativbewegung zwischen dem wenigstens einen beweglichen Tastkopfteil (7) und dem festen Tastkopfteil (6) misst. In eine Regelvorrichtung (8) werden Zustandsgrößen (n₁, n₂) von der Antriebsseite (2) und der Lastseite (3) eingekoppelt. Von dem Messsystem (13) des Tastkopfes werden Zustandsgrößen (n₃, n₄) in eine Regelvorrichtung (9) eingekoppelt. Die Regelvorrichtung (8) sowie die Regelvorrichtung (9) steuern den Antrieb (2), in den zusätzlich noch eine Führungsgröße (10) eingekoppelt wird.

Die Übertragungscharakteristik des Getriebes (4) setzt sich aus einem Dämpfungsfaktor (d₀) und einer Federkonstante (c₀) zusammen.

Gemäß Fig. 2 sind mit Fig. 1 identische Bauteile mit gleichen Bezugszahlen versehen. Der Unterschied zu Fig. 1 besteht darin, dass der Taststift an einem Werkstück (14) angetastet ist, so dass sich eine andere Schwingungs- und Dämpfungscharakteristik ergibt: zur Feder- und Dämpfungskonstante der Tastkopfschaukel (c₁, d₁) werden im angetasteten Zustand die Feder- und Dämpfungskonstanten des Taststiftes (c₂, d₂) parallel geschaltet.

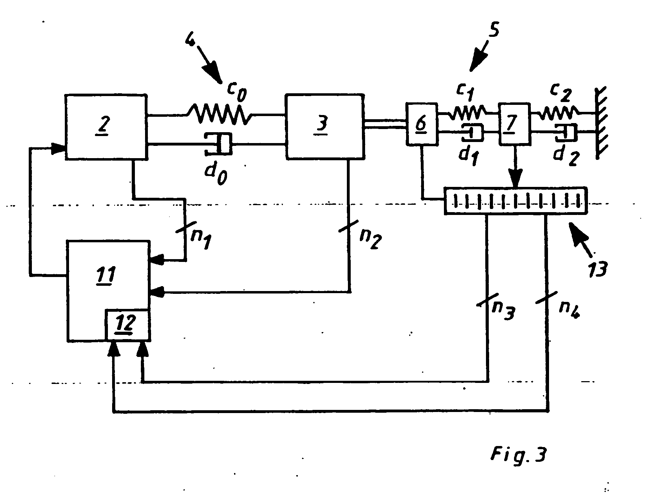

Gemäß Fig. 3 sind die Komponenten der Antriebsseite (2) und der Lastseite (3) des festen Messkopfteiles (6) sowie des beweglichen Messkopfteiles (7) wie in Fig. 1 vorhanden. Lediglich in der Regelvorrichtung (11) ist die Regelvorrichtung (12) integriert. Die Regelvorrichtung (12) kann als Hardware ausgebildet sein. Es ist auch möglich, diese als Software der Regelvorrichtung (11) vorzusehen.

Die Regelvorrichtungen (9, 12) sind vorteilhaft als lineare Regler, zum Beispiel Zustandsregler ausgebildet. Sie können auch als nichtlineare Regler, zum Beispiel Ljapunow-Regler ausgebildet sein.

Die Regler (8, 11) können als lineare Regler, zum Beispiel Zustandsregler ausgebildet sein. Es ist eine Einkopplung in den Strom- oder Momentenregelkreis der Achsenantriebe (nicht dargestellt) des Koordinatenmessgerätes, alternativ auch in den Geschwindigkeitsregelkreis möglich.

### Bezugszahlen

- 1: Antriebsregelkreis
- 2: Antriebsseite
- 3: Lastseite
- 4: Getriebeelastizität
- 5: Messkopfschaukel mit Messsystem
- 6: fester Messkopfteil
- 7: beweglicher Messkopfteil
- 8: Regelvorrichtung
- 9: Regelvorrichtung
- 10: Führungsgröße
- 11: Regelvorrichtung
- 12: Regelvorrichtung
- 13: Messvorrichtung
- 14: Werkstück
- n₁: Zustandsgröße
- n₂: Zustandsgröße
- n₃: Zustandsgröße
- n₄: Zustandsgröße
- d₀, d₁, d₂: Dämpfungsfaktor
- c₀, c₁, c₂: Federkonstante

## Patentansprüche

1. Verfahren zur Schwingungsdämpfung eines Koordinatenmessgerätes,
**dadurch gekennzeichnet , dass** zeitliche Ableitungen eines Tastkopfmesssignales von im Tastkopf auftretenden Schwingungen als wenigstens eine Störgröße erfasst werden, und dass die wenigstens eine Störgröße in wenigstens einen Antriebsregelkreis (2) der Achsantriebe des Koordinatenmessgerätes eingekoppelt wird, wobei das Tastkopfmesssignal die Relativbewegungen zwischen einem festen Tastkopfteil (6) und mindestens einem beweglichen Tastkopfteil (7) erfasst, und dass der wenigstens eine Achsenantrieb des Koordinatenmessgerätes durch den Antriebsregelkreis (2) so geregelt wird, dass Relativschwingungen zwischen dem beweglichen Teil des Tastkopfes und dem festen Teil minimiert werden.

2. Verfahren nach Anspruch 1, **dadurch gekennzeichnet, dass** Biegeschwingungen eines an dem Tastkopf angeordneten Tasterelementes eliminiert werden.

3. Koordinatenmessgerät mit einem Tastkopf bestehend aus einem festen und mindestens einem dazu beweglichen Teil sowie einer Vorrichtung zur Erfassung der Relativbewegung zwischen dem festen und dem mindestens einen beweglichen Tastkopfteil und wenigstens einem Antriebsregelkreis für die Achsenantriebe des Koordinatenmessgerätes,
**dadurch gekennzeichnet , dass** wenigstens eine Regelvorrichtung (9, 12) zur Regelung des wenigstens einen Antriebsregelkreises (2) vorgesehen ist, wobei die wenigstens eine Regelvorrichtung (9, 12) als eine das von der Vorrichtung (13) zur Erfassung der Relativbewegung zwischen dem festen Tastkopfteil (6) und dem mindestens einen beweglichen Tastkopfteil (7) erfasste Tastkopfmesssignal verarbeitende und die zeitlichen Ableitungen des Tastkopfmesssignals als Störgröße in den wenigstens einen Antriebsregelkreis (2) einkoppelnde Regelvorrichtung (9, 12) ausgebildet ist.

4. Koordinatenmessgerät nach Anspruch 3, **dadurch gekennzeichnet, dass** die Regelvorrichtung (9, 12) als Hard- und/oder Software ausgebildet ist.

5. Koordinatenmessgerät nach Anspruch 3, **dadurch gekennzeichnet, dass** die Regelvorrichtung (12) als eine in eine Regelvorrichtung (11) integrierte Regelvorrichtung (12) ausgebildet ist.

## Claims

1. A method for the vibration damping of a coordinate measuring machine, **characterised in that** time derivatives of a probe measuring signal from vibrations occurring in the probe are detected as at least one disturbance variable, and **in that** the at least one disturbance variable is injected into at least one drive control loop (2) of the axis drives of the coordinate measuring machine, the probe measuring signal detecting the relative movements between a fixed probe part (6) and at least one movable probe part (7), and **in that** the at least one axis drive of the coordinate measuring machine is controlled by the drive control loop (2) such that relative vibrations between the movable part of the probe and the fixed part are minimised.

2. A method according to Claim 1, **characterised in that** flexural vibrations of a scanning element disposed on the probe are eliminated.

3. A coordinate measuring machine comprising a probe consisting of a fixed part and at least one part movable relative thereto and also a device for detecting the relative movement between the fixed and the at least one movable probe part and at least one drive control loop for the axis drives of the coordinate measuring machine, **characterised in that** at least one closed loop control device (9, 12) is provided for controlling the at least one drive control loop (2), the at least one closed loop control device (9, 12) being a closed loop control device (9, 12) processing the probe measuring signal detected by the device (13) for detecting the relative movement between the fixed probe part (6) and the at least one movable probe part (7) and injecting the time derivatives of the probe measuring signal as a disturbance variable into the at least one drive control loop (2).

4. A coordinate measuring machine according to Claim 3, **characterised in that** the closed loop control device (9, 12) is hardware and/or software.

5. A coordinate measuring machine according to Claim 3, **characterised in that** the closed loop control device (12) is a closed loop control device (12) integrated into a closed loop control device (11).

## Revendications

1. Procédé pour amortir les vibrations d'un appareil de mesure à coordonnées, **caractérisé en ce que** des dérivations temporelles d'un signal de mesure de sonde dans les vibrations générées dans la sonde sont détectées comme au moins une grandeur perturbatrice, et **en ce que** l'au moins une grandeur perturbatrice est alimentée dans au moins un circuit régulateur d'entraînement (2) des entraînements d'axe de l'appareil de mesure à coordonnées, le signal de mesure de sonde détectant les mouvements relatifs entre une partie fixe (6) de la sonde et au moins une partie mobile (7) de la sonde et **en ce que** l'au moins un entraînement d'axe de l'appareil de mesure à coordonnées est réglé par le circuit régulateur d'entraînement (2) de telle façon que les mouvements relatifs entre la partie mobile de la sonde et la partie fixe sont minimisés.

2. Procédé selon la revendication 1, **caractérisé en ce que** des vibrations de flexion d'un élément palpeur disposé au niveau de la sonde sont éliminées.

3. Appareil de mesure à coordonnées muni d'une sonde se composant d'une partie fixe et d'au moins une partie mobile par rapport à celle-ci, ainsi que d'un dispositif destiné à détecter le mouvement relatif entre la partie fixe et l'au moins une partie mobile de la sonde, et d'au moins un circuit régulateur d'entraînement pour les entraînements d'axe de l'appareil de mesure à coordonnées, **caractérisé en ce qu'**il est prévu au moins un dispositif de réglage (9, 12) pour régler l'au moins un circuit régulateur d'entraînement (2), l'au moins un dispositif de réglage (9, 12) étant conçu pour traiter le signal de mesure de sonde détecté par le dispositif (13) de détection du mouvement relatif entre la partie fixe (6) de la sonde et l'au moins une partie mobile (7) de la sonde, et comme dispositif de réglage (9, 12) pour coupler les dérivations temporelles du signal de mesure de sonde comme grandeur perturbatrice dans l'au moins un circuit régulateur d'entraînement (2).

4. Appareil de mesure à coordonnées selon la revendication 3, **caractérisé en ce que** le dispositif de réglage (9, 12) est conçu comme matériel informatique et/ou comme logiciel.

5. Appareil de mesure à coordonnées selon la revendication 3, **caractérisé en ce que** le dispositif de réglage (12) est conçu comme un dispositif de réglage (12) intégré dans un dispositif de réglage (11).
